# EUROPÄISCHE PATENTSCHRIFT

(11) **EP 3 099 639 B1**
(45) Veröffentlichungstag und Bekanntmachung des Hinweises auf die Patenterteilung: **20.12.2017**
(21) Anmeldenummer: 15703015.6
(22) Anmeldetag: 26.01.2015
(51) Int. Cl.: C03B 19/10

(54) **VERFAHREN UND VORRICHTUNG ZUR HERSTELLUNG VON GLASHOHLKUGELN**
METHOD AND DEVICE FOR PRODUCING HOLLOW GLASS SPHERES
PROCÉDÉ ET DISPOSITIF POUR LA FABRICATION DE BILLES DE VERRE CREUSES

(30) Priorität: 27.01.2014 DE 102014201404
(43) Veröffentlichungstag der Anmeldung: 07.12.2016
(73) Patentinhaber: Ingenieurbüro Franke GlasTechnologie-Service, 01468 Moritzburg / OT Friedewald (DE)
(72) Erfinder: FRANKE, Matthias, 01468 Moritzburg (DE)
(74) Vertreter: Gulde & Partner
(86) Internationale Anmeldenummer: PCT/EP2015/051449
(87) Internationale Veröffentlichungsnummer: WO 2015/110621

(56) Entgegenhaltungen:
- BE-A4- 899 935
- FI-B- 85 365
- US-A- 2 702 407
- US-A- 3 294 511
- US-A- 4 661 137

## Beschreibung

Die Erfindung betrifft ein Verfahren und eine Vorrichtung zur Herstellung von Glashohlkugeln, insbesondere Micro-Glashohlkugeln.

Die Herstellung und Verwendung von Micro-Glashohlkugeln ist dem Fachmann allgemein bekannt. Die Micro-Glashohlkugeln kommen zum Beispiel als Füllstoffe für Kunststoffe, als Leichtbaufüllstoffe in mechanisch beanspruchten Strukturteilen oder Fugenfüller zur Anwendung. Ihre Herstellung erfolgt meist auf der Basis von Borosilicatglas. Eine hohe chemische Beständigkeit, Feuerfestigkeit, Gasdichtheit und Resistenz gegen Wasser ermöglichen ein breites Spektrum an möglichen Anwendungsfällen.

Micro-Hohlglaskugeln werden konventionell in einem Mehrstufenprozess hergestellt. Zunächst wird Kalk-Natron- und/oder Borosilicatglas hergestellt und zu einem feinen Pulver gemahlen. Dem Pulver wird weiterhin ein Treibmittel zugesetzt. Anschließend erfolgt die Glashohlkugelbildung in einem Hochtemperatur-Wärmeübertragungsprozess. Dieser Prozess kann zum Beispiel in einem Schachtofen ablaufen. Dabei sinkt mit steigender Temperatur eine Viskosität von Teilchen des Glases derart ab, dass eine Oberflächenspannung sich bildender Glaströpfchen zur Bildung von Glaskugeln führt. Die hohen Temperaturen bewirken, dass das zugesetzte Treibmittel ausgast und in den Glaskugeln ein Gasdruck aufgebaut wird. Dieser Gasdruck bewirkt ein Wachstum der kleinen vollen Glaskugeln zu größeren hohlen Glaskugeln. Ein derartiges Verfahren wird zum Beispiel in der WO 2008/087047 A1 beschrieben.

Ein weiteres Verfahren zur Herstellung keramischer oder glasartiger Micro-Hohlkugeln wird außerdem durch die EP 1 832 560 A2 beschrieben. In dem Verfahren wird ein mineralisches blähfähiges Granulat als Rohstoffbasis verwendet. Dieses wird in einen Flammenstrom eingetragen. Nachdem das Granulat in einem Hochtemperaturbereich über 1000 °C geschmolzen ist, erfolgt durch eine Änderung einer Atmosphäre ein sogenannter RedOx-Wechsel, bei dem der Werkstoff von einem höherwertigen in einen niederwertigen Oxidationszustand übergeht. In einem Flugstrom der Körner des Granulats erfolgt ein Aufblähen durch Entgasung der geschmolzenen Granulatkörner zu Micro-Hohlkugeln. Das Eintragen des Rohstoff-Granulats zum Schmelzen und das anschließende Aufblähen ist ein zweistufiger thermischer Prozess.

Die bekannten Verfahren weisen einige Nachteile auf. So ist es bislang nicht möglich, mit diesen Verfahren einen genau definierten Bereich der Kugelgröße einzustellen. Dieser wird bereits durch ein sich ergebenes Korngrößenspektrum der Glaspartikel im Mahlprozess beeinflusst und hängt von vielen weiteren Prozessparametern ab. Die Wirtschaftlichkeit der bekannten Verfahren wird zum einen durch verwendete thermodynamische Mehrstufen-Prozesse negativ beeinflusst. Dabei werden die Rohstoffe als Mischung in einem vorgeschalteten Prozess zu Glas geschmolzen und anschließend als Glas mit weiteren Rohstoffen als Mischung in den Reaktionsprozess zu Hohlkugeln überführt. Zum anderen stellen anschließende Klassiervorgänge einen zusätzlichen Aufwand dar. Somit ist ein Bedarf an wirtschaftlichen Alternativen gegeben.

US 3,294,511, US 2,702,407, FI 85365 B offenbaren jeweils Verfahren und Vorrichtungen zur Herstellung von Glashohlkugeln bei denen eine Glasschmelze in kleine Elemente getrennt wird und einer Temperaturbehandlung unterzogen wird.

Die Aufgabe der vorliegenden Erfindung besteht somit darin, ein Verfahren zur Herstellung von Glashohlkugeln, insbesondere Micro-Glashohlkugeln sowie eine entsprechende Vorrichtung zu schaffen, mit denen eine prozesssichere und kostengünstige Produktion ermöglicht wird.

Diese Aufgabe wird durch die Gegenstände der unabhängigen Patentansprüche 1 und 10 gelöst. Erfindungsgemäß ist ein Verfahren zur Herstellung von Glashohlkugeln vorgesehen, bei dem zunächst eine Glasschmelze aus wenigstens einem Rohmaterial erzeugt wird, diese einem Läuterungsprozess unterzogen wird und anschließend ein strangförmiger Glasschmelzestrom erzeugt wird und von diesem kleine Elemente abgetrennt und in Richtung eines temperatur- und/oder druck- und/oder atmosphärenzusammensetzungsgeregelten Prozessbereichs beschleunigt werden, wobei ein erster Prozessteilbereich des Prozessbereichs zumindest abschnittsweise auf eine Temperatur geregelt wird, die unterhalb einer Läuterungstemperatur der Glasschmelze liegt und/oder auf einen Druck geregelt wird, der oberhalb eines Grenzdrucks liegt und/oder in dem zumindest abschnittsweise eine reduzierende Atmosphäre erzeugt wird und ein zweiter Prozessteilbereich zumindest abschnittsweise auf eine Temperatur geregelt wird, die oberhalb der Läuterungstemperatur der Glasschmelze liegt und/oder auf einen Druck geregelt wird, der unterhalb eines Grenzdrucks liegt und/oder in dem zumindest abschnittsweise eine oxidierende Atmosphäre erzeugt wird und die Elemente den zweiten Prozessteilbereich in einer Freiflugphase durchqueren, nachdem sie den ersten Prozessteilbereich durchquert haben.

Die Herstellung von Glashohlkugeln in dem erfindungsgemäßen Verfahren basiert auf einer gezielten Ausnutzung einer sogenannten Reboil-Reaktion.

Die Reboil-Reaktion ist dem Fachmann hinreichend bekannt ist. In einer konventionellen Glasproduktion werden einem Rohmaterial Läutermittel beigemischt, welche bei Temperaturen oberhalb einer Läuterungstemperatur der Glasschmelze gasförmig entweichen. Durch einen entstehenden Auftrieb und einen entstehenden Partialdruck werden kleine Blasen von größeren Blasen aufgenommen. Konventionelle Läuterungsprozesse sind darauf ausgelegt, dass die Blasen aus der Glasschmelze möglichst vollständig beseitigt werden, um Materialfehler zu vermeiden. Ein Teil der Gase aus den Rohstoffen wird jedoch auch im Glas gelöst und verbleibt als Komponente in der Glaszusammensetzung. Im Zuge einer Weiterverarbeitung des Glases wird gezielt vermieden, dass die Temperatur nochmals auf einen Wert oberhalb der Läuterungstemperatur ansteigt. Der Grund ist, dass in solch einem Fall der Läuterungsprozess als Restreaktion nochmals in Gang gesetzt wird und wieder kleine Gasblasen freigesetzt werden. Diesen Prozess bezeichnet man als Reboil-Reaktion. Es existiert eine große Bandbreite bekannter Maßnahmen, um dies bei konventionellen Herstellungsverfahren für Glasprodukte vermeiden. Beispielhaft sei eine Regelung entscheidender Prozessparameter wie der Temperatur, des Drucks und der Atmosphärenzusammensetzung oder ein Zugeben von Kohlestaub zur Glasschmelze genannt.

In dem erfindungsgemäßen Verfahren wird die Reboil-Reaktion für eine Weiterverarbeitung jedoch gezielt ausgelöst.

Zunächst wird die Glasschmelze aus dem Rohmaterial hergestellt. Diese wird dem Läuterungsprozess unterzogen. Als Rohmaterial kommt bevorzugt ein Kalk-Natron-Glas zur Anwendung. Als Läuterungsmittel wird bevorzugt Natriumsulfat verwendet. Es erfolgt also eine Sulfat-Läuterung, die dem Fachmann grundsätzlich bekannt ist. Auf weitere mögliche Rohmaterialien und Läuterungsmittel wird an anderer Stelle eingegangen. Anschließend wird ein dünner strangförmiger Glasschmelzestrom erzeugt. Von diesem werden kleine Elemente abgetrennt, die in Richtung des Prozessbereichs beschleunigt werden. Die Elemente durchqueren den Prozessbereich in der Freiflugphase. Dabei durchqueren die Elemente zunächst den ersten Prozessteilbereich und danach den zweiten Prozessteilbereich. In dem ersten Prozessteilbereich werden Bedingungen eingestellt, die ein Eintreten der Reboil-Reaktion unterbinden. In dem zweiten Prozessbereich werden Bedingungen eingestellt, die das Eintreten der Reboil-Reaktion hervorrufen. Vorzugsweise werden dazu Prozessparameter wie zum Beispiel Temperatur, Druck und Atmosphärenzusammensetzung mit Hinblick auf chemisch oxidierende oder reduzierende Eigenschaften eingestellt. Vorzugsweise erfolgt die Einstellung der Prozessparameter derart, dass sich die eingestellten Parameter lokal über den Prozessbereich verändern, jedoch zeitlich konstant bleiben. Indem die Elemente in der Freiflugphase den ersten Prozessteilbereich mit reboil-unterbindenden Bedingungen durchqueren und anschließend den zweiten Prozessteilbereich mit reboil-förderlichen Eigenschaften durchqueren, erfolgt - wählt man gedanklich eines der Elemente als ein Bezugssystem - die zeitliche Umstellung der Bedingungen von reboil-unterbindend auf reboil-förderlich sehr schnell, vorzugsweise sprunghaft. Die lokalen Prozessparameter an einem Übergang des ersten Prozessteilbereichs zu dem zweiten Prozessteilbereich werden vorzugsweise derart eingestellt, das diese sprunghafte Änderung der Bedingungen gewährleistet ist. Die in Richtung des Prozessbereichs beschleunigten und den ersten Prozessteilbereich durchquerenden kleinen Elemente des Schmelzestroms nehmen infolge ihrer vorhandenen Viskosität und Oberflächenspannung eine Form kleiner Kugeln an, die mit der Schmelze gefüllt sind. In diesem Zusammenhang wird im Folgenden auch von massiven Kugeln gesprochen.

Der Begriff der Kugel ist im Rahmen der vorliegenden Erfindung abstrakt zu interpretieren, da, wie dem Fachmann bekannt ist, in der Technik keine idealen geometrischen Formen erzielbar sind. Der Begriff Kugel kennzeichnet daher einen Modellgedanken, der in der Realität großzügig auszulegen ist, so dass zum Beispiel auch eierförmige Elemente, quaderförmige Elemente mit weichen Kanten und Ecken oder kurze schlauchartige Elemente im Rahmen der vorliegenden Erfindung als Kugel anzusehen sind. Diese Beispiele dienen lediglich der exemplarischen Begriffserörterung und erschöpfen die Bedeutung des Begriffs der Kugel keinesfalls. Analog ist der Begriff der Hohlkugel zu interpretieren, der einen vorhandenen Hohlraum im Innern eines außen geschlossenen Körpers einbezieht.

Wenn die kleinen Elemente, mit anderen Worten die kleinen massiven Kugeln in den zweiten Prozessteilbereich eintreten, ändern sich infolge der eingestellten Prozessparameter sprunghaft die auf die kleinen massiven Kugeln wirkenden Bedingungen. Die Prozessparameter sind, wie oben beschrieben, so eingestellt, dass die Reboil-Reaktion einsetzt, während die Elemente den zweiten Prozessteilbereich durchqueren. Durch die Reboil-Reaktion bilden sich Gasblasen in den bis dahin mit Schmelze ausgefüllten kleinen Kugeln, wodurch diese aufgebläht werden und sich zu kleinen Glashohlkugeln entwickeln.

Die vorliegende Erfindung bietet eine Vielzahl von Vorteilen. Es handelt sich um einen einstufigen thermodynamischen Prozess, wobei das Rohmaterial als Mischung zu Glas geschmolzen und in den Reaktionsprozess zu Hohlkugeln überführt wird Es sind insbesondere sehr kleine Glashohlkugeln mit genau definierter Kugelgröße herstellbar. Nach Einstellung der Prozessparameter kann der Produktionsprozess kontinuierlich und prozesssicher aufrechterhalten werden. Die Kosten werden unter anderem durch geringere Ausschussquoten, einen Entfall eines nachgelagerten Klassieraufwands und eine erhöhte Produktivität gesenkt. Zudem ist der Prozess gut automatisierbar.

Im Folgenden werden zunächst einige Begriffe klar definiert. Desweitere werden bevorzugte Ausgestaltungen der vorliegenden Erfindung beschrieben, die sich auch in den Unteransprüchen wiederfinden.

Der Begriff des strangförmigen Schmelzestroms bezeichnet einen Fluss aus Schmelze, der eine Längserstreckung aufweist, also die Erstreckung entlang einer Flussrichtung, die deutlich größer ist, als eine Erstreckung quer zur Flussrichtung. Als Grenzdruck wird der Druck einer Atmosphäre bezeichnet, die ein Element umgibt und der einen kritischen Wert hat, der für sich betrachtet die Grenze zwischen reboil-unterbindenden und reboil-förderlichen Bedingungen markiert. Als oxidierende beziehungsweise reduzierende Atmosphäre wird eine ein Element umgebende Atmosphäre bezeichnet, deren chemische Zusammensetzung für sich allein betrachtet eine Oxidation beziehungsweise eine Reduktion fördert.

In bevorzugter Ausgestaltung der vorliegenden Erfindung beträgt eine Differenz der Temperatur in dem ersten und der Temperatur in dem zweiten Prozessteilbereich zwischen 1 K und 400 K, bevorzugt zwischen 15 K und 200 K, weiterhin bevorzugt zwischen 30 K und 100 K, weiterhin bevorzugt zwischen 50 K und 80 K und insbesondere bevorzugt bei 50 K. Es wurde festgestellt, dass die Reboil-Reaktion unter diesen Bedingungen besonders vorteilhaft abläuft.

In weiterer bevorzugter Ausgestaltung der vorliegenden Erfindung liegt die Temperatur in dem ersten Prozessteilbereich unterhalb von 1400°C und die Temperatur in dem zweiten Prozessteilbereich liegt oberhalb von 1400°C, weiterhin bevorzugt liegt die Temperatur in dem ersten Prozessteilbereich unterhalb von 1200°C und die Temperatur in dem zweiten Prozessteilbereich liegt oberhalb von 1200°C, insbesondere bevorzugt liegt die Temperatur in dem ersten Prozessteilbereich unterhalb von 1300°C und die Temperatur in dem zweiten Prozessteilbereich liegt oberhalb von 1300°C. Bei diesen Bedingungen führt das erfindungsgemäße Verfahren, unter Verwendung dem Fachmann bekannter Rohstoffe und Läuterungsmittel, zu besonders vorteilhaften Ergebnissen.

In einer weiteren bevorzugten Ausgestaltung der vorliegenden Erfindung liegt der Grenzdruck bei 101 325 Pa, mit anderen Worten entspricht der Grenzdruck einem auf der Erde in Höhe eines Meeresspiegels herrschenden Norm-Druck und die Differenz des Drucks in dem ersten und des Drucks in dem zweiten Prozessteilbereich liegt zwischen 1 Pa und 20 Pa. In diesem Bereich bilden sich die Gasblasen in Folge des Reboil-Prozesses besonders vorteilhaft aus.

In einer weiteren bevorzugten Ausgestaltung der vorliegenden Erfindung erfolgt die Erzeugung der reduzierenden beziehungsweise oxidierenden Atmosphäre durch Regelung eines Sauerstoffüberschusses. Dies bietet den Vorteil, dass ein risikoarmes Medium verwendet wird, das auch für einen Betrieb anderer Betriebsmittel, wie zum Beispiel Brenner, eingesetzt werden kann.

Die Elemente legen in der Freiflugphase durch den zweiten Prozessteilbereich eine Strecke zwischen 0,5 m und 5 m, bevorzugt zwischen 1 m und 4 m, weiterhin bevorzugt zwischen 1,5 m und 2,5 m und insbesondere bevorzugt von 2m zurück. Diese Werte haben sich als besonders wirtschaftlich und vorteilhaft für den Ablauf des Prozesses herausgestellt.

Von dem dünnen strangförmigen Glasschmelzestrom werden Elemente mit einer maximalen Erstreckung abgetrennt, die kleiner ist, als 1 mm, bevorzugt kleiner als 0,5 mm, weiterhin bevorzugt kleiner als 0,4 mm, weiterhin bevorzugt kleiner als 0,2 mm und insbesondere bevorzugt kleiner als 0,15 mm. Dies bietet den Vorteil, dass sich die kleinen Glashohlkugeln besonders kugelförmig, gleichmäßig und mit einem sehr guten Verhältnis von Volumina einer Masse und eines Hohlraums ausbilden. Der Glasschmelzestrom hat dementsprechend einen Durchmesser von vorzugsweise weniger, als 1 mm.

Die von dem Glasschmelzestrom abgetrennten Elemente werden auf eine Geschwindigkeit zwischen 5 m/s und 15 m/s beschleunigt, bevorzugt zwischen 7 m/s und 12 m/s und insbesondere auf 9 m/s beschleunigt. Dies bietet den Vorteil, dass der Prozess zum einen produktiv ist und zum anderen dynamische Einflüsse, wie zum Beispiel eine Luftreibung möglichst klein bleiben. Weiterhin bilden sich vorteilhaft formgenaue kugelförmige Elemente aus.

Für das Abtrennen der Elemente von dem dünnen strangförmigen Schmelzestrom kann ein schnell bewegtes mechanisches Trennwerkzeug verwendet werden. Dies bietet den Vorteil, dass eine gezielte Beschleunigung der Elemente möglich ist und ein Abtrennen mit hoher Genauigkeit erfolgt. Durch entsprechende Auslegung einer Geometrie des Trennwerkzeugs kann zudem die Formgenauigkeit der Elemente positiv beeinflusst werden. Bevorzugt handelt es sich bei dem mechanischen Trennwerkzeug um ein Schneidrad mit bevorzugt einem Zähnebelag. Dies bietet den Vorteil, dass über eine Drehzahl die Erstreckung der abgetrennten Elemente beeinflussbar ist und dass ein Kontaktverhalten zwischen Zähnebelag und Schmelze beeinflussbar ist. Je größer die Drehzahl des Schneidrades ist, desto kleiner werden die abgetrennten Elemente beziehungsweise umso mehr Elemente werden in derselben Zeit bei gleicher Fließgeschwindigkeit des strangförmigen Schmelzestroms abgetrennt. Bevorzugt wird das Schneidrad mit einer Drehzahl zwischen 5.000 1/min und 20.000 1/min betrieben, weiterhin bevorzugt zwischen 10.000 1/min und 17.000 1/min und insbesondere bevorzugt zwischen 13.000 1/min und 14.000 1/min. Allgemein ist festzuhalten, dass die Reboil-Reaktion schneller und vollständiger einsetzt, je kleiner die Elemente sind. Kleinere Elemente wärmen in der Freiflugphase im Prozessbereich schneller durch, so dass es schneller zu der Reboil-Reaktion kommt. Somit kann über die Drehzahl des Schneidrades der Prozess positiv beeinflusst werden. Bevorzugt ist eine Regelung der Drehzahl des Schneidrades derart, dass eine Schwankungsbreite der Erstreckung der Elemente nicht größer ist, als +/- 0,05 mm.

Das Trennwerkzeug kann mit unterschiedlicher Anzahl an Zähnen ausgestattet werden. Für Kugelgrößen von 1 - 0,5 mm werden 1500 - 1800 Zähne auf dem Umfang des Trennwerkzeuges vorzugsweise als Schneidrad angeordnet. Für kleinere Kugelgrößen wird die Anzahl der Zähne auf > 1800, vorzugsweise 1800 - 2000 erhöht.

Für die Erzeugung des strangförmigen Glasschmelzestroms kann ein mechanisches Formwerkzeug verwendet werden. Dies bietet den Vorteil, dass der strangförmige Glasschmelzestrom als Basis für die Elemente bereits sehr formgenau hergestellt werden kann. Besonders bevorzugt ist die Verwendung von wenigstens einem Ventil, wodurch Form und eine Fließgeschwindigkeit vorteilhaft beeinflussbar sind.

In einer weiteren bevorzugten Ausgestaltung der vorliegenden Erfindung ist vorgesehen, dass den Elementen während der Freiflugphase in dem zweiten Prozessteilbereich Energie mit wenigstens einem Brenner zugeführt wird. Besonders bevorzugt wird wenigstens ein Sauerstoffbrenner verwendet. Dies bietet den Vorteil, dass bereits mit einem einzigen Betriebsmittel eine Temperaturbeeinflussung, eine Atmosphärenbeeinflussung und eine Beschleunigung des Elements beziehungsweise der Glashohlkugel in dem Prozessbereich möglich ist. Da sich durch ein Aufblähen zu Glashohlkugeln die Geschwindigkeit der Glashohlkugeln verringert, können vorteilhafterweise weitere Transportbrenner verwendet werden, die den Glashohlkugeln neben thermischer auch kinetische Energie zuführen. Weiterhin bevorzugt ist eine Verwendung bestimmter Brennstoffen wie Brenngas, Leichtöl, Kohlenstoff, vorzugsweise Erdgas in einem stöchiometrischen oder leicht unterstöchiometrischen Verhältnis mit Luft.

In einer weiteren bevorzugten Ausgestaltung der vorliegenden Erfindung ist vorgesehen, dass am Ende des Prozessbereichs ein Gasstrom erzeugt wird, mit dem die Glashohlkugeln abgefangen werden. Dies bietet den Vorteil, dass die Glashohlkugeln nicht mit einer mechanischen Belastung durch einen Festkörper beaufschlagt werden muss. Weiterhin ist es vorteilhaft möglich, den Gasstrom so zu beeinflussen, dass die Glashohlkugeln in Richtung einer Auffangvorrichtung abgelenkt werden. Ein weiter Vorteil ist, dass mit dem Gasstrom eine Kühlung der Glashohlkugeln einhergeht. Weiterhin vorteilhaft ist die Verwendung des Gasstroms in Bezug auf einen kontinuierlichen Produktionsbetrieb. Insbesondere ist zum Abfangen der Glashohlkugeln eine Absaugung bevorzugt, die zum Beispiel am Ende des Prozessbereichs angeordnet sein kann. Eine Absaugung hat einen weiteren Vorteil, eine zusätzliche Verringerung des Drucks in dem zweiten Prozessteilbereich, die eine bessere Reboil-Reaktion und eine deutlich geringere Ausschussquote ermöglicht.

Als Rohmaterial kann ein Gemisch aus Quarz, Natrium- und Calciumcarbonat und Aluminiumoxid verwendet werden. Dies bietet den Vorteil, dass eine gut bekannte Glassorte verwendet wird und der Prozess besonders gut beherrschbar wird. In weiterer bevorzugter Ausgestaltung ist vorgesehen, dass als Läutermittel Natriumsulfat verwendet wird. Die bietet den Vorteil, dass die Sulfat-Läuterung ebenfalls ein gut bekannter und somit beherrschbarer Prozess ist. Bevorzugt die Sulfat-Läuterung nach dem Stand der Technik eingestellt, indem zum Beispiel 17 kg Natriumsulfat auf 1000 kg Rohmaterial zugegeben werden. Bevorzugt kann die Glasschmelze mit einem Sulfatanteil überfrachtet werden. Hierdurch lässt sich eine Schüttdichte der in dem erfindungsgemäßen Verfahren hergestellten Glashohlkugeln vorteilhaft beeinflussen. Weiterhin bevorzugt kann ein erhöhter Anteil an Kohle zugegeben werden und gegebenenfalls eine reduzierende Atmosphäre im Bereich des Läuterungsprozesses, zum Beispiel durch Geringhaltung eines Sauerstoffüberschusses, erzeugt werden. Weiterhin kann bevorzugt ein höherer atmosphärischer Druck im Bereich des Läuterungsprozesses erzeugt werden. Diese Maßnahmen bieten den Vorteil dass eine Löslichkeit von Gasen, zum Beispiel von Schwefeltrioxid in der Glasschmelze erhöht wird. So wird vorteilhaft vermieden, dass sich eine unvollständige Läuterung ausbildet und das Glas blasig wird beziehungsweise sich bei weiterer Überfrachtung das Natriumsulfat als Schmelze (genannt Galle) an der Glasbadoberfläche abscheidet. Ein Blasenaustritt aus der Glasschmelze kann vorteilhaft unterdrückt werden, auch wenn die Schmelze mit einer Gasfracht bereits gesättigt ist. Als Rohmaterial kann auch ein Borosilicatglas und als Läuterungsmittel Natriumsulfat verwendet werden. Die Gasfracht in der Glasschmelze besteht dann zum Beispiel aus Bortrioxid und Schwefeltrioxid. Untersuchungen haben gezeigt, dass das erfindungsgemäße Verfahren auch funktioniert, wenn andere Rohmaterialien, zum Beispiel Basaltglas oder E-Glas und entsprechende Läuterungsmitteln verwendet werden. Maßgebliche Prozessparameter, die dabei ausgelegt werden müssen, sind die Temperatur, eine Viskosität, eine Atmosphäre und ein Druck.

Der Glasschmelze kann nach ihrer Erzeugung Glasfritte mit anderer chemischer Zusammensetzung zugeführt werden. Hierdurch kann die Viskosität der Glasschmelze beeinflusst werden. Verarbeitungs- und Reboileigenschaften können so vorteilhaft verändert werden, wodurch auf Basis einer gemeinsamen Glasschmelze, unterschiedlichste Variationen von chemischen Glasapplikationen ermöglicht werden. Besonders vorteilhaft erweist sich ein Zumischen der Glasfritte zu der Schmelze auf einem Weg von einem Ort der Herstellung der Glasschmelze zu einem Ort der Erzeugung des strangförmigen Glasschmelzestroms, da die Zumischung in einem laufenden Produktionsbetrieb variabel bleibt.

In einer weiteren bevorzugten Ausgestaltung der vorliegenden Erfindung wird die Glasschmelze nach ihrer Erzeugung in wenigstens zwei Teilströme aufgeteilt. Dies bietet den Vorteil, dass eine flexible Weiterverarbeitung möglich ist. Zum Beispiel kann die beschriebene Zumischung von Glasfritte zu den einzelnen Teilströmen unterschiedlich sein. So können in vorteilhafter Weise parallel verschiedene Glasprodukte hergestellt werden. Auch eine Herstellung von massiven Glaskugeln ist möglich, wenn die Bedingungen in dem ersten und zweiten Prozessteilbereich gleichgeschaltet werden. Bevorzugt werden mit einem ersten Teilstrom Glashohlkugeln nach dem erfindungsgemäßen Verfahren hergestellt und mit wenigstens einem weiteren Teilstrom wenigstens eine andere Art von Glasprodukt hergestellt. Dies bietet den Vorteil, dass die Produktion flexibilisiert wird und Stillstandszeiten verringert werden können. Beispiele für konventionelle Glasprodukte sind Kristallglas, Flachglas oder Behälterglas.

Bevorzugt eignet sich für die Zumischung unterschiedlicher Glasfritte die bekannte Technologie eines Färbe-Feeders, nach welchem der Glasschmelze auf dem Weg zu einer Verarbeitung farbige Glasfritte mit veränderten Eigenschaften zugemischt werden kann. S Bekanntermaßen treten dabei oftmals auch Probleme der Blasenbildung auf Grund unterschiedlicher Eigenschaften unterschiedlicher Glasarten auf. Dieses Verhalten kann man vorteilhaft für eine Steuerung eines Aufblähens der Elemente zu Glashohlkugeln in dem erfindungsgemäßen Verfahren übertragen.

In einer weiteren bevorzugten Ausgestaltung der vorliegenden Erfindung werden die Glashohlkugeln mit einer hydrophoben Beschichtung versehen. Dies bietet den Vorteil, dass eine Korrosion der Glashohlkugeln vermieden wird. Dies ist häufig eine Folge von Luftfeuchtigkeit oder Laugenbildung in einem chemischen Produktionsumfeld. Weiterhin bevorzugt ist eine Oberflächenbeschichtung mit zum Beispiel Silan-Verbindungen. Dadurch kann vorteilhaft ein Verkleben oder eine Agglomeration in Auffang- und Ladeeinrichtungen verhindert werden. Weitere Oberflächenbeschichtungen mit mineralischen oder organischen Stoffen (zum Beispiel organische BeKieselsol oder Hydrophobierungsmittel) sind bevorzugt, um Oberflächeneigenschaften der Glashohlkugeln vorteilhaft anzupassen.

Ein weiterer Aspekt der betrifft eine Vorrichtung zur Herstellung von Glashohlkugeln, aufweisend einen Schmelzofen mit einem ersten Bereich, der ausgebildet ist eine Glasschmelze zu erzeugen und mit einem zweiten Bereich, der ausgebildet ist, die Glasschmelze auf eine Läuterungstemperatur zu regeln, weiterhin aufweisend nachgelagerte Mittel zur Erzeugung eines strangförmigen temperaturgeregelten Schmelzestroms sowie Mittel zu einer Auftrennung des Schmelzestroms in kleine Elemente und zu einer vereinzelten Beschleunigung der kleinen Elemente, wobei die Vorrichtung einen nachgelagerten Prozessbereich mit regelbarer Temperatur und/oder regelbarem Druck und/oder regelbarer Atmosphärenzusammensetzung aufweist, von dem ein erster Prozessteilbereich zumindest abschnittsweise auf eine Temperatur unterhalb der Läuterungstemperatur und/oder auf einen Druck oberhalb eines Grenzdrucks regelbar ist und/oder in dem eine reduzierende Atmosphäre erzeugbar ist und von dem ein zweiter Prozessteilbereich auf eine Temperatur oberhalb der Läuterungstemperatur und/oder auf einen Druck unterhalb eines Grenzdrucks regelbar ist und/oder in dem eine oxidierende Atmosphäre erzeugbar ist.

Der Vorteil der erfindungsgemäßen Vorrichtung besteht darin, dass mit ihr die Durchführung des beschriebenen erfindungsgemäßen Verfahrens möglich ist.

Der erste Bereich, der ausgebildet ist die Glasschmelze zu erzeugen, kann zum Beispiel ein Bereich einer Schmelzwanne in dem Schmelzofen sein, der in der Nähe einer Schnittstelle für einen Rohmaterialeintrag beginnt und über Brenner verfügt, die ausgebildet sind, das Rohmaterial beziehungsweise den ersten Bereich des Schmelzofens auf eine Schmelztemperatur zu erhitzen. Der Bereich ist dann zum Beispiel durch eine Position eines letzten Brenners definiert beziehungsweise durch eine Wirkzone von durch die Brenner abgegebener Wärme. Der zweite Bereich, der ausgebildet ist, die Glasschmelze auf eine Läuterungstemperatur zu regeln, kann in analoger Weise ausgeprägt sein. Die Mittel zur Erzeugung des strangförmigen temperaturgeregelten Schmelzestroms können beispielsweise einen separaten Ofenbereich aufweisen, der von dem ersten und zweiten Bereich räumlich abgetrennt sein kann und über Zuleitungen für einen Transport der Schmelze mit den Bereichen verbunden ist. In dem separaten Ofenbereich kann beispielsweise ein weiterer Brenner angeordnet sein, der ausgebildet ist, die Schmelze auf eine Arbeitstemperatur zu erhitzen. An diesen Bereich kann sich ein in einem Querschnitt auf einen Schmelze-Volumenstrom angepasster Zulaufbereich anschließen, wobei an einem Ende eine Ventilöffnung vorgesehen sein kann. Die Mittel zur Auftrennung des Schmelzestroms in kleine Elemente und zu einer vereinzelten Beschleunigung der kleinen Elemente können zum Beispiel ein Trennwerkzeug aufweisen. Der nachgelagerte Prozessbereich kann beispielsweise ein Reaktionskanals sein, der eine geschlossene äußerer Hülle aufweist, wobei an einer den Mitteln zur Auftrennung des Schmelzestroms zugewandten Seite eine Einlassöffnung und an einer den Mitteln zur Auftrennung des Schmelzestroms abgewandten Seite eine Austrittsöffnung vorgesehen sein kann. Der Prozessbereich weist Mittel zur Regelung von Temperatur, Druck und Atmosphärenzusammensetzung auf. Die Mittel können zum Beispiel Brenner zur Beeinflussung der Temperatur und Zu- beziehungsweise Ableitungen für gasförmige Medien zur Beeinflussung von Druck und Atmosphärenzusammensetzung aufweisen. Brenner weisen den besonderen Vorteil auf, dass zum Beispiel bei Sauerstoffbrennern eine simultane Zuführung gasförmiger Medien möglich wird. Eine alternative Wahl der Mittel liegt im Rahmen der Kompetenz des mit einer konstruktiven Ausgestaltung betrauten Fachmannes. Dasselbe gilt für eine Integration von für eine Regelung erforderlichen Messmitteln. Die Abgrenzung des ersten Prozessteilbereichs von dem zweiten Prozessteilbereich kann analog zu den Bereichen des Schmelzofens durch die Anordnung der Brenner erfolgen. Ein Vorsehen von Schottblechen mit Durchtrittsöffnungen, ausgelegt auf eine Flugbahn der Prozesskanal durchquerenden Elemente, ist ebenfalls denkbar.

Im Folgenden werden bevorzugte Ausgestaltungen der vorliegenden Erfindung beschrieben, die sich auch in den Unteransprüchen wiederfinden.

In bevorzugter Ausgestaltung der erfindungsgemäßen Vorrichtung ist vorgesehen, dass die Vorrichtung Mittel zur Regelung der Temperatur aufweist, die ausgebildet sind, die Temperatur in dem ersten Prozessteilbereich ganz oder abschnittsweise auf Werte unterhalb von 1300° C einzustellen und/oder in dem zweiten Prozessteilbereich ganz oder abschnittsweise auf Werte oberhalb von 1300° C einzustellen. Dies bietet den Vorteil, dass Temperaturwerte einstellbar sind, die ober- beziehungsweise unterhalb einer Temperatur liegen, bei der die Reboil-Reaktion in dem erfindungsgemäßen Verfahren bevorzugt einsetzt.

In weiterer bevorzugter Ausgestaltung der erfindungsgemäßen Vorrichtung ist vorgesehen, dass die Vorrichtung Mittel zur Regelung des Drucks aufweist, die ausgebildet sind, den Druck in dem ersten Prozessteilbereich ganz oder abschnittsweise auf Werte von 101 325 Pa bis 101 345 Pa und/oder in dem zweiten Prozessteilbereich ganz oder abschnittsweise auf Werte von 101 325 Pa bis 101 305 Pa einzustellen. Dies bietet den Vorteil, dass ausgehend von einem atmosphärischen Normdruck auf Meereshöhe Druckwerte einstellbar sind, die in einem Bereich liegen, bei dem die Reboil-Reaktion in dem erfindungsgemäßen Verfahren bevorzugt einsetzt.

In weiterer bevorzugter Ausgestaltung der erfindungsgemäßen Vorrichtung ist vorgesehen, dass die Vorrichtung Mittel zur Regelung der Atmosphärenzusammensetzung aufweist, die ausgebildet sind, in dem ersten Prozessteilbereich ganz oder abschnittsweise eine reduzierende Atmosphäre zu erzeugen und in dem zweiten Prozessteilbereich ganz oder abschnittsweise eine oxidierende Atmosphäre zu erzeugen. Dies bietet den Vorteil, dass ein schnell von einer Atmosphäre, bei der keine Reboil-Reaktion eintritt, auf eine Atmosphäre, bei der die Reboil-Reaktion in dem erfindungsgemäßen Verfahren bevorzugt einsetzt, gewechselt werden kann.

Der nachgelagerte Prozessbereich kann eine Länge zwischen 0,5 m und 5 m, bevorzugt zwischen 1 m und 4 m, weiterhin bevorzugt zwischen 1,5 m und 2,5 m und insbesondere bevorzugt von 2m aufweisen.

Der erste und der zweite Prozessteilbereich können wenigstens jeweils einen Brenner aufweisen. Somit lassen sich die Prozessteilbereiche vorteilhaft abgrenzen und die individuell benötigten Prozessparameter sind einstellbar. Insbesondere ist es bevorzugt, dass die Brenner Sauerstoffbrenner sind, da Druck und Atmosphärenzusammensetzung dann vorteilhaft mit beeinflussbar sind.

Die Mittel zur Auftrennung des Schmelzestroms in kleine Elemente und zur vereinzelten Beschleunigung der kleinen Elemente können wenigstens ein mechanisches Trennwerkzeug aufweisen. Dies bietet den Vorteil, dass eine gezielte Beschleunigung der Elemente möglich ist und ein Abtrennen mit hoher Genauigkeit erfolgen kann. Durch entsprechende Auslegung einer Geometrie des Trennwerkzeugs kann zudem die Formgenauigkeit der Elemente positiv beeinflusst werden. Bevorzugt handelt es sich bei dem mechanischen Trennwerkzeug um ein Schneidrad mit bevorzugt einem Zähnebelag. Dies bietet den Vorteil, dass das Schneidrad geeignet ist, über einen Betrieb bei einer bestimmten Drehzahl, die Erstreckung der abgetrennten Elemente zu beeinflussen und dass ein Kontaktverhalten zwischen Zähnebelag und Schmelze beeinflussbar ist. Je größer die Drehzahl des Schneidrades ist, desto kleiner werden die abgetrennten Elemente beziehungsweise umso mehr Elemente können in derselben Zeit bei gleicher Fließgeschwindigkeit des strangförmigen Schmelzestroms abgetrennt werden. Bevorzugt ist das Schneidrad ausgebildet mit einer Drehzahl zwischen 5.000 1/min und 20.000 1/min, weiterhin bevorzugt zwischen 10.000 1/min und 17.000 1/min und insbesondere bevorzugt zwischen 13.000 1/min und 14.000 1/min betrieben zu werden beziehungsweise rotatorisch bewegbar ist. Weiterhin bevorzugt ist das Schneidrad derart ausgebildet, dass eine Drehzahlgenauigkeit von wenigsten beziehungsweise nicht schlechter als +/- 100 1/min gewährleistet ist.

Die Mittel zur Erzeugung eines strangförmigen temperaturgeregelten Schmelzestroms können wenigstens einen Brenner und wenigstens ein mechanisches Formwerkzeug aufweisen. Insbesondere ist das Formwerkzeug bevorzugt als Düse ausgeführt. Dies bietet den Vorteil, dass sowohl eine Temperatur, als auch ein Volumenstrom einstellbar ist.

Bei geringem Durchmesser des ablaufenden Glasstrahles < 1 mm, besonders < 0,5 mm besteht die Gefahr, dass durch die Umlaufgeschwindigkeit des Trennwerkzeuges, im bevorzugten Fall des Schneidrades, eine Bewegung der Umgebungsluft erzeug wird. Dadurch beginnt der Glasstrang zu pendeln. Die Trennschärfe der Glaselemente wird ungenau oder es entstehen dünne Glasfäden. Mit einer Verlängerung des Formwerkzeuges als Auslauftrichter oder -rohr bis kurz über das Trennwerkzeug, kann man den Weg des Glasstranges verkürzen und den Einfluss der Luftbewegung minimieren.

An einem Ende des zweiten Prozessteilbereichs kann wenigstens ein Mittel zur Erzeugung eines Gasstroms angeordnet sein. Insbesondere bevorzugt ist eine Absaugung vorgesehen, die bevorzugt an der Austrittsöffnung des vorzugsweisen Prozesskanals angeordnet ist. Dies bietet den Vorteil, dass die Glashohlkugeln nicht mit einer mechanischen Belastung durch einen Festkörper beaufschlagt werden muss. Weiterhin ist es vorteilhaft möglich, den Gasstrom so zu beeinflussen, dass die Glashohlkugeln in Richtung einer Auffangvorrichtung abgelenkt werden. Ein weiter Vorteil ist, dass ein Gasstrom eine Kühlung der Glashohlkugeln ermöglicht. Insbesondere ist zum Abfangen der Glashohlkugeln eine Absaugung vorgesehen, die zum Beispiel am Ende des Prozessbereichs angeordnet sein kann. Eine Absaugung hat einen weiteren Vorteil, eine zusätzliche Verringerung des Drucks in dem zweiten Prozessteilbereich, die eine bessere Reboil-Reaktion und eine deutlich geringere Ausschussquote ermöglicht.

Die Vorrichtung kann wenigstens ein Mittel zur Erzeugung wenigstens zweier unabhängiger Teilschmelzeströme aus einer Glasschmelze aufweisen. Dies bietet den Vorteil, dass unterschiedliche Teilbereiche der Vorrichtung aus einer gemeinsamen Glasschmelze gespeist werden können.

In weiterer bevorzugter Ausgestaltung der erfindungsgemäßen Vorrichtung ist ferner vorgesehen, dass die Vorrichtung wenigstens zwei unabhängige Speicher- und Dosiereinrichtung für Rohmaterial aufweist. Hierdurch wird es vorteilhaft möglich, variable chemische Stoffmischungen bereitzustellen und zum Beispiel auch die unabhängigen Teilschmelzeströme mit unterschiedlichen chemischen Stoffmischungen zu versorgen.

Die Vorrichtung kann mit weiteren nachgelagerten Mitteln zur Herstellung wenigstens einer anderen Art von Glasprodukt wirkverbunden sein. Zum Beispiel kann die Vorrichtung mit einer weiteren Anlage zur Herstellung von Flachglas verbunden sein. Die Kapazitätenauslastung kann so besser gesteuert werden und die Produktion wird flexibler.

Die in dem erfindungsgemäßen Verfahren hergestellten Glashohlkugeln weisen vorzugsweise bestimmte Eigenschaften auf. So liegt ein Kugeldurchmesser vorzugsweise im Bereich von 0,05 mm bis 1 mm, besonders bevorzugt zwischen 0,05 mm und 0,5 mm. Eine isostatische Druckfestigkeit der Glashohlkugeln beträgt bevorzugt 50 bar bis 2000 bar, besonders bevorzugt 100 bar bis 500 bar. Eine Aufschwimmrate liegt bevorzugt bei mindestens 90 %. Dies bedeutet, dass ein Anteil der Glashohlkugeln, welche eine Dichte von weniger als 1 g/cm³ besitzen, also in Wasser schwimmen, bei mindestens 90 % liegt. Eine Schüttdichte, mit anderen Worten eine Dichte eines Messvolumens, liegt bevorzugt zwischen 0,04 g / cm³ und 0,5 g / cm³, besonders bevorzugt zwischen 0,05 g / cm³ und 0,1 g / cm³.

Weitere bevorzugte Aus- und Weiterbildungen der vorliegenden Erfindung ergeben sich aus vorteilhafter Kombination aller offenbarten Merkmale, einbezüglich der Ausführungsbeispiele. Deren Übertragung auf andere Glasherstellverfahren und -produkte ist möglich, sofern sie sich nicht ausdrücklich auf Glashohlkugeln beschränken.

Die erfindungsgemäß hergestellten Glashohlkugeln können in Strukturbauteile eingesetzt werden. Strukturbauteile können vielfältig ausgeprägt sein, so dass an dieser Stelle nur beispielhaft tragende Maschinenstrukturelemente, Teile im Automobilbau oder in der Luftfahrt genannt werden. Der besondere Vorteil dieser Strukturbauteile besteht in einer massiven Reduktion des Gewichts bei gleichzeitig hoher Belastbarkeit, da die Glashohlkugeln, insbesondere wenn mehrere Glashohlkugeln enthalten sind, angreifende Kräfte ähnlich dem Prinzip eines Fachwerks zerlegen und abführen können.

Die erfindungsgemäß hergestellten Glashohlkugeln können als Signalfarben-Material verwendet werden. Die Micro-Hohlglas-Kugeln werden mit farbigen aushärtenden Bindemitteln gemischt und auf signalgebende Flächen als Anstrich oder Beschichtung aufgetragen. Die Signalwirkung entsteht durch Lichteinfall auf die betreffende Fläche. Dies bietet den Vorteil, dass durch Lichtbrechung und/oder Streuung in den Hohlglaskugeln und durch die Reflexion des Lichtes die Fläche besonders gut optisch hervorgehoben wird. Einsatzgebiete sind zum Beispiel VerkehrsleitEinrichtungen und -schilder.

Die Erfindung wird nachfolgend anhand der Ausführungsbeispiele und dazugehöriger Zeichnungen näher erläutert. Die Figuren zeigen:
- Figur 1: Erfindungsgemäßes Verfahren in einer bevorzugten Ausführungsvariante als Blockschema,
- Figur 2: Vorrichtung zur Durchführung des erfindungsgemäßen Verfahrens in einer bevorzugten Ausführungsvariante in schematischer Darstellung und
- Figur 3: Vorrichtung zur Durchführung des erfindungsgemäßen Verfahrens mit mehrerer unabhängigen Produktionsteillinien in einer bevorzugten Ausführungsvariante in schematischer Darstellung.

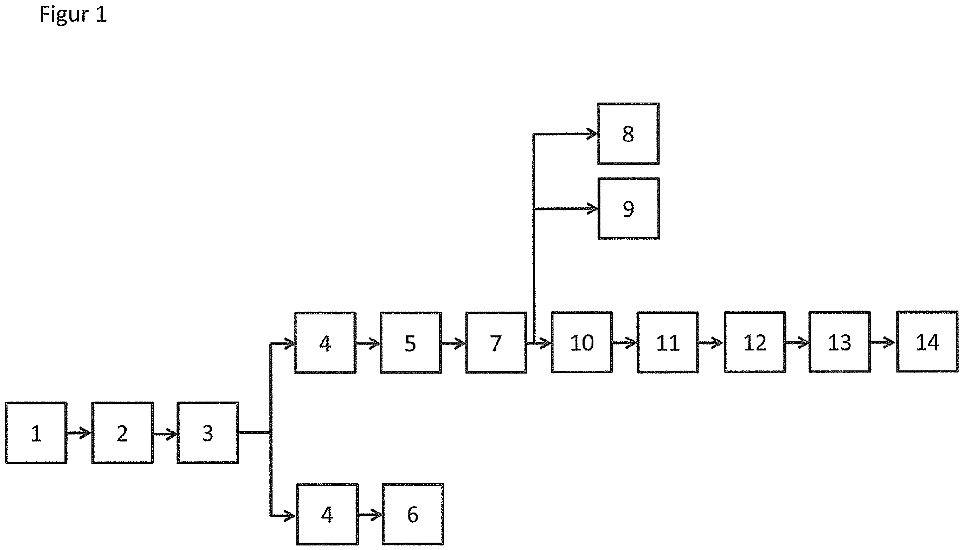

Figur 1 zeigt ein Blockschema eines erfindungsgemäßen Verfahrens in einer bevorzugten Ausführungsvariante. In Schritt 1 des Verfahrens wird zunächst eine Glasschmelze aus Kalk-Natron-Glas hergestellt. Einem Glasrohmaterial wird dabei ein Anteil Natriumsulfat zugesetzt. Ein Mischverhältnis der Stoffe beträgt 17 kg Natriumsulfat auf 1000 kg Rohmaterial auf Basis von Quarz, Natrium- und Calciumcarbonat. In Schritt 2 wird die hergestellte Glasschmelze einem Läuterungsprozess unterzogen. Eine Temperatur in einem für die Herstellung der Glasschmelze und für den Läuterungsprozess verwendeten Ofens wird dazu auf mehr als 1300° C angehoben. Nach Abschluss des Läuterungsprozesses wird in Schritt 3 die Glasschmelze in zwei Teilströme aufgeteilt und durch entsprechende Kanäle aus dem Ofen abgeleitet, wobei eine Arbeitstemperatur von weniger 1300° C sichergestellt wird. Den Teilströmen werden auf ihrem Fließweg zu einer Weiterverarbeitung in Schritt 4 Glasfritte mit unterschiedlicher chemischer Zusammensetzung zugesetzt. Hierzu werden sogenannte Feeder verwendet, die als Dosiereinrichtung fungieren. Spezielle Rührer im Glasschmelzestrom bewirken eine gleichmäßige Vermengung. Die Glasschmelze des einen Teilstroms wird in Schritt 6 dazu verwendet, ein konventionelles farbiges Flachglas herzustellen. Die Glasschmelze des anderen Teilstroms wird in Schritt 5 parallel zu Schritt 6 einer Weiterverarbeitung zur Erzeugung eines dünnen strangförmigen Schmelzestroms zugeführt. Hierzu wird der Schmelzestrom zunächst in einem Kanal geführt und an dessen Ende durch eine Düsenöffnung abgeführt. Der so hergestellte strangförmige Schmelzestrom hat einen Durchmesser von weniger als 0,4 mm. In Schritt 7 werden von dem strangförmigen Schmelzestrom kleine Elemente abgetrennt, indem der Schmelzestrom auf ein schnell rotierendes Schneidrad geleitet wird. Das Schneidrad rotiert dabei mit einer Drehzahl von mehr als 10.000 1/min. Eine Fließgeschwindigkeit des strangförmigen Schmelzestroms und die Drehzahl des Schneidrades werden so aufeinander abgestimmt und geregelt, dass von dem strangförmigen Schmelzestroms Elemente mit einer Erstreckung von maximal 0,4 mm abgetrennt werden. Eine Schwankung der Erstreckung der abgerannten Elemente wird somit auf +/- 0,05 mm begrenzt. Die Elemente werden durch die Bewegung des Schneidrades abgetrennt und gleichzeitig beschleunigt. Die Beschleunigung erfolgt in Richtung eines Prozesskanals, der als Prozessbereich dient. Schritt 8 erfolgt parallel zu den Schritten 9 bis 12. Schritt 8 sieht vor, dass ein erster Abschnitt des Prozesskanals beziehungsweise ein erster Prozessteilbereich des Prozessbereichs auf seiner gesamten Länge von 1 m auf eine Temperatur geregelt wird, die 40 K unterhalb von 1300° C liegt und dass ein in dem ersten Prozessteilbereich Druck gegenüber einem atmosphärischen Normaldruck um 10 Pa erhöht wird. Weiterhin wird über Zuführung geeigneter Gasmedien eine reduzierende Atmosphäre erzeugt wird. Schritt 9 betrifft den zweiten Abschnitt des Prozesskanals beziehungsweise den zweiten Prozessteilbereich des Prozessbereichs auf seiner gesamten Länge von ebenfalls 1 m. Die Temperatur wird auf 40 K oberhalb von 1300° C geregelt und der Druck gegenüber dem atmosphärischen Normaldruck um 10 Pa verringert. Weiterhin wird über Zuführung geeigneter Gasmedien eine oxidierende Atmosphäre erzeugt wird. Die Beeinflussung dieser Parameter erfolgt im gesamten Prozessbereich über Brenner mit einer Begasung. In Schritt 10 durchqueren die Elemente in einem Freiflug zunächst den ersten Abschnitt des Prozesskanals. Dabei werden sie durch Transportbrenner unterstützt. Durch ihre Temperatur und Viskosität bilden sich die Elemente zu kleinen massiven beziehungsweise mit Glasschmelze gefüllten Kugeln aus. In Schritt 11 durchqueren die massiven Kugeln den zweiten Abschnitt des Prozesskanals. Durch die sprunghafte Änderung der Prozessbedingungen an einem Übergang von dem ersten Abschnitt des Prozesskanals zu dem zweiten Abschnitt des Prozesskanals wird eine Reboil-Reaktion in Gang gesetzt. Diese führt zu einem Aufblähen der massiven Kugeln zu Glashohlkugeln. Die entstandenen Glashohlkugeln werden am Ende des zweiten Abschnitts des Prozesskanals in Schritt 12 durch einen Gasstrom in Form einer Absaugung abgefangen und in einen Auffangbehälter geleitet. In Schritt 13 erhalten die Glashohlkugeln noch eine hydrophobe Beschichtung. In Schritt 14 werden weitere Oberflächenbeschichtungen vorgenommen, um ein Verkleben der kleinen Glashohlkugeln zu vermeiden.

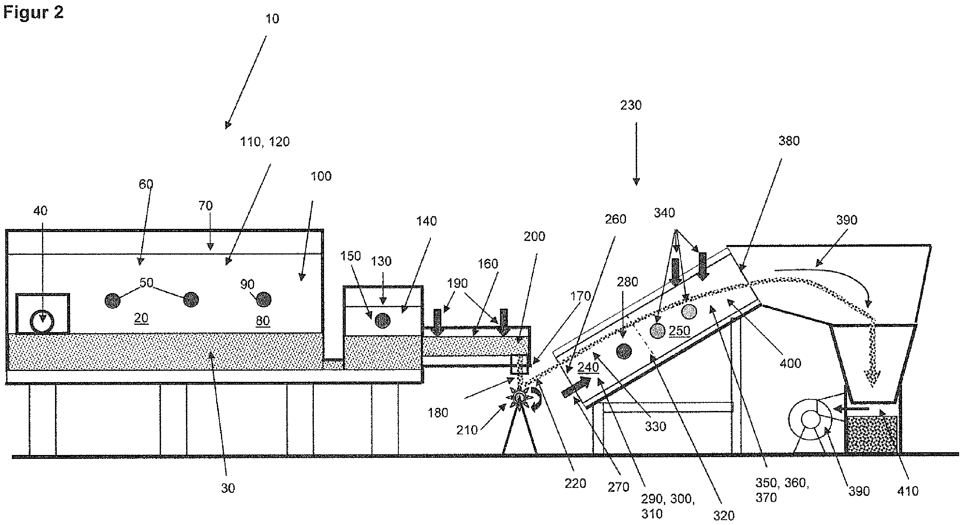

Figur 2 zeigt eine schematische Darstellung einer Vorrichtung zur Durchführung des erfindungsgemäßen Verfahrens zur Herstellung von Glashohlkugeln in einer bevorzugten Ausführungsvariante. Die Vorrichtung weist einen Schmelzofen 10 mit einem ersten Bereich 20 einer Schmelzwanne 70 auf, der ausgebildet ist eine Glasschmelze 30 zu erzeugen. Vorgesehen ist hierzu eine Schleuse 40, die ausgebildet ist, Rohmaterial einzutragen. Weiterhin sind Brenner 50 vorgesehen, die ausgebildet sind, eine Schmelztemperatur 60 zum Aufschmelzen des Rohmaterials zu erzeugen. Ein zweiter Bereich 80 des Schmelzofens 10 ist ausgebildet, einen Läuterungsprozess durchzuführen. Hierzu sind Brenner 90 vorgesehen, die eine Läuterungstemperatur 100 von mehr als 1300° C erzeugen können. Insbesondere werden im Falle der Brenner 50, 90 Brenner mit Begasung verwendet, die ausgebildet sind, einen Druck 110 und eine Atmosphäre 120 im Schmelzofen 10 zu beeinflussen. An den Schmelzofen 10 schließt sich eine Arbeitswanne 130 an, in der Glasschmelze bei einer Arbeits-Temperatur 140 zwischenspeicherbar ist. Entsprechende Brenner 150 sind vorgesehen. Eine Zuführung 160 ist ausgebildet, die Schmelze aus der Arbeitswanne 130 zu einem Glasablauf 170 zu führen. Der Glasablauf 170 weist insbesondere eine Düsenöffnung auf, der ausgebildet ist, einen dünnen strangförmigen Schmelzestrom 180 zu erzeugen. In der Zuführung 160 sind Brenner 190 vorgesehen, die ausgebildet sind, eine Zuführtemperatur 200 zu erzeugen. Unterhalb des Glasablaufs 170 ist ein Schneidrad 210 angeordnet, dass mit bis zu 17.000 1/min rotatorisch bewegbar ist. Das Schneidrad 210 ist ausgebildet von dem dünnen strangförmigen Schmelzestrom 180 kleine Elemente 220 abzutrennen und zu beschleunigen. Dem Schneidrad 210 ist ein Prozesskanal 230 nachgelagert, der einen ersten Bereich 240 und einen zweiten Bereich 250 aufweist. An einer Eintrittsöffnung 260 sind Transportbrenner 270 angeordnet, die ausgebildet sind die Elemente 220 beziehungsweise massiven Glaskugeln 330 zu beschleunigen. In dem ersten Bereich 240 sind Brenner mit Begasung 280 angeordnet. Die Brenner mit Begasung 280 sind ausgebildet eine Temperatur 290 unterhalb von 1300° C und einen Druck 300, der bis zu 20 Pa oberhalb eines atmosphärischen Normaldrucks liegt sowie eine reduzierende Atmosphäre 310 zu erzeugen. An einem Übergang 320 zu dem zweiten Bereich 250 und in dem Bereich 250 sind ebenfalls Brenner mit Begasung 340 angeordnet. Die Brenner mit Begasung 340 sind ausgebildet eine Temperatur 350 oberhalb von 1300° C und einen Druck 360, der bis zu 20 Pa unterhalb eines atmosphärischen Normaldrucks liegt sowie eine oxidierende Atmosphäre 370 zu erzeugen. An einer Austrittsöffnung 380 des Prozesskanals 230 ist eine Absaugung 390 vorgesehen, die ausgebildet ist, Glashohlkugeln 400 in einen Auffangbehälter 410 zu leiten.

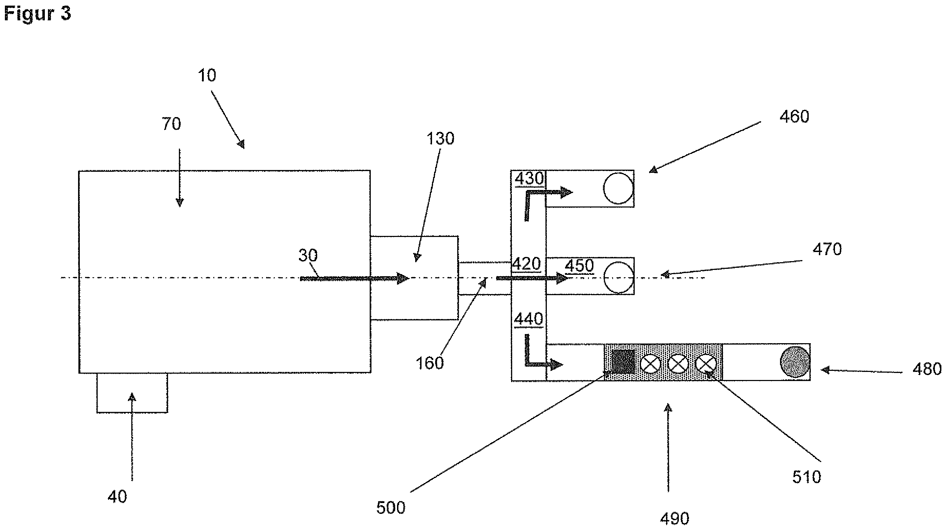

Figur 3 zeigt eine Vorrichtung zur Durchführung des erfindungsgemäßen Verfahrens mit mehreren unabhängigen Produktionsteillinien in einer bevorzugten Ausführungsvariante in schematischer Darstellung. Gezeigt ist der Schmelzofen 10 mit der Schleuse 40 für den Rohmaterialeintrag. Im Anschluss an die Arbeitswanne 130 und die Zuführung 160 ist eine Abzweigung 420 an die Zuführung 160 angeschlossen. Somit ist die Vorrichtung ausgebildet die Glasschmelze 30 in drei unabhängige Schmelzekanäle 430, 440, 450 zu leiten. Der Schmelzekanal 430 ist ausgebildet, einen Teil der Glasschmelze 30 einer konventionellen Produktionslinie 460 zuzuführen. Der Schmelzekanal 450 ist ausgebildet, einen Teil der Glasschmelze 30 einer Produktionslinie 470 zur Durchführung eines erfindungsgemäßen Verfahrens zur Herstellung von Glashohlkugeln zuzuführen. Der Schmelzekanal 440 ist ausgebildet, einen Teil der Glasschmelze 30 einer weiteren Produktionslinie 480 zuzuführen. An dem Schmelzekanal 440 ist ein Mischfeeder 490 vorgesehen, der Speicher- und Dosiereinrichtungen 500 sowie Mischer 510 aufweist, die ausgebildet sind, der Glasschmelze 30 in dem Schmelzekanal 440 Glasfritte mit unterschiedliche chemischer Zusammensetzung zuzuführen.

**Bezugszeichen**
- 10: Schmelzofen
- 20: erster Bereich
- 30: Glasschmelze
- 40: Schleuse
- 50: Brenner
- 60: Schmelztemperatur
- 70: Schmelzwanne
- 80: zweiter Bereich
- 90: Brenner
- 100: Läuterungstemperatur
- 110: Druck
- 120: Atmosphäre
- 130: Arbeitswanne
- 140: Arbeitstemperatur
- 150: Brenner
- 160: Zuführung
- 170: Glasablauf
- 180: Schmelzestrom
- 190: Brenner
- 200: Zuführtemperatur
- 210: Schneidrad
- 220: Elemente
- 230: Prozesskanal
- 240: erster Bereich
- 250: zweiter Bereich
- 260: Eintrittsöffnung
- 270: Transportbrenner
- 280: Brenner mit Begasung
- 290: Temperatur
- 300: Druck
- 310: Atmosphäre
- 320: Übergang
- 330: massive Glaskugeln

- 340: Brenner mit Begasung
- 350: Temperatur
- 360: Druck
- 370: Atmosphäre
- 380: Austrittsöffnung
- 390: Absaugung
- 400: Glashohlkugeln
- 410: Auffangbehälter
- 420: Abzweigung
- 430: Schmelzekanal
- 440: Schmelzekanal
- 450: Schmelzekanal
- 460: konventionelle Produktionslinie
- 470: Produktionslinie zur Durchführung eines erfindungsgemäßen Verfahrens zur Herstellung von Glashohlkugeln
- 480: weitere Produktionslinie
- 490: Mischfeeder
- 500: Speicher- und Dosiereinrichtungen
- 510: Mischer

## Patentansprüche

1. Verfahren zur Herstellung von Glashohlkugeln (400), wobei zunächst eine Glasschmelze (30) aus wenigstens einem Rohmaterial und einem Läutermittel, welches bei einer Temperatur oberhalb einer Läuterungstemperatur der Glasschmelze gasförmig entweicht, erzeugt wird, diese einem Läuterungsprozess unterzogen wird und anschließend ein strangförmiger Glasschmelzestrom (180) erzeugt wird und von diesem kleine Elemente (220) abgetrennt und in Richtung eines temperatur- und/oder druck- und/oder atmosphärenzusammensetzungsgeregelten Prozessbereichs beschleunigt werden, wobei ein erster Prozessteilbereich des Prozessbereichs zumindest abschnittsweise auf eine Temperatur (290) geregelt wird, die unterhalb einer Läuterungstemperatur (100) der Glasschmelze (30) liegt und/oder auf einen Druck (300) geregelt wird, der oberhalb eines Grenzdrucks liegt und/oder in dem zumindest abschnittsweise eine reduzierende Atmosphäre (310) erzeugt wird, so dass eine Reboil-Reaktion im ersten Prozessteilbereich unterbunden wird und ein zweiter Prozessteilbereich zumindest abschnittsweise auf eine Temperatur (350) geregelt wird, die oberhalb der Läuterungstemperatur (100) der Glasschmelze (30) liegt und/oder auf einen Druck (360) geregelt wird, der unterhalb eines Grenzdrucks liegt und/oder in dem zumindest abschnittsweise eine oxidierende Atmosphäre (370) erzeugt wird, so dass ein Reboil-Reaktion im zweiten Prozessteilbereich hervorgerufen wird und die Elemente (220) den zweiten Prozessteilbereich in einer Freiflugphase durchqueren, nachdem sie den ersten Prozessteilbereich durchquert haben.

2. Verfahren zur Herstellung von Glashohlkugeln (400) nach Anspruch 1,
**dadurch gekennzeichnet, dass**
eine Differenz der Temperatur (290) in dem ersten und der Temperatur (350) in dem zweiten Prozessteilbereich zwischen 30 K und 100 K liegt.

3. Verfahren zur Herstellung von Glashohlkugeln (400) nach Anspruch 1 oder 2,
**dadurch gekennzeichnet, dass**
die Temperatur (290) in dem ersten Prozessteilbereich unterhalb von 1300°C liegt und die Temperatur (350) in dem zweiten Prozessteilbereich oberhalb von 1300°C liegt.

4. Verfahren zur Herstellung von Glashohlkugeln (400) nach einem der Ansprüche 1 bis 3,
**dadurch gekennzeichnet, dass**
der Grenzdruck bei 101 325 Pa liegt und eine Differenz des Drucks (300) in dem ersten und des Drucks (360) in dem zweiten Prozessteilbereich zwischen 1 Pa und 20 Pa liegt.

5. Verfahren zur Herstellung von Glashohlkugeln (400) nach einem der Ansprüche 1 bis 4,
**dadurch gekennzeichnet, dass**
die reduzierende beziehungsweise oxidierende Atmosphäre (310, 370) durch Regelung eines Sauerstoffüberschusses erzeugt wird.

6. Verfahren zur Herstellung von Glashohlkugeln (400) nach einem der Ansprüche 1 bis 5,
**dadurch gekennzeichnet, dass**
dass den Elementen (220) während der Freiflugphase in dem zweiten Prozessteilbereich Energie mit wenigstens einem Brenner (340) zugeführt wird.

7. Verfahren zur Herstellung von Glashohlkugeln (400) nach einem der Ansprüche 1 bis 6,
**dadurch gekennzeichnet, dass**
dass am Ende des Prozessbereichs ein Gasstrom erzeugt wird, mit dem die Glashohlkugeln (400) abgefangen werden.

8. Verfahren zur Herstellung von Glashohlkugeln (400) nach einem der Ansprüche 1 bis 7,
**dadurch gekennzeichnet, dass**
die Glasschmelze nach ihrer Erzeugung in wenigstens zwei Teilströme aufgeteilt wird und mit einem ersten Teilstrom Glashohlkugeln (400) nach dem erfindungsgemäßen Verfahren hergestellt werden und mit wenigstens einem weiteren Teilstrom wenigstens eine andere Art von Glasprodukt hergestellt wird.

9. Verfahren zur Herstellung von Glashohlkugeln (400) nach einem der Ansprüche 1 bis 8,
**dadurch gekennzeichnet, dass**
die Glashohlkugeln (400) mit einer hydrophoben Beschichtung versehen werden.

10. Vorrichtung zur Herstellung von Glashohlkugeln (400), aufweisend einen Schmelzofen (10) mit einem ersten Bereich (20), der ausgebildet ist eine Glasschmelze (30) aus einem Rohmaterial und einem Läutermittel zu erzeugen und mit einem zweiten Bereich (80), der ausgebildet ist, die Glasschmelze (30) auf eine Läuterungstemperatur (100) zu regeln, weiterhin aufweisend nachgelagerte Mittel zur Erzeugung eines strangförmigen temperaturgeregelten Schmelzestroms (180) sowie Mittel zu einer Auftrennung des Schmelzestroms (180) in kleine Elemente (220) und zu einer vereinzelten Beschleunigung der kleinen Elemente (220), wobei die Vorrichtung einen nachgelagerten Prozessbereich mit regelbarer Temperatur und/oder regelbarem Druck und/oder regelbarer Atmosphärenzusammensetzung aufweist, von dem ein erster Prozessteilbereich zumindest abschnittsweise auf eine Temperatur (290) unterhalb der Läuterungstemperatur (100) und/oder auf einen Druck (300) oberhalb eines Grenzdrucks regelbar ist und/oder in dem eine reduzierende Atmosphäre (310) erzeugbar ist und von dem ein zweiter Prozessteilbereich auf eine Temperatur (350) oberhalb der Läuterungstemperatur (100) und/oder auf einen Druck (360) unterhalb eines Grenzdrucks regelbar ist und/oder in dem eine oxidierende Atmosphäre (370) erzeugbar ist.

11. Vorrichtung zur Herstellung von Glashohlkugeln (400) nach Anspruch 10,
**dadurch gekennzeichnet, dass**
die Vorrichtung Mittel zur Regelung der Temperatur aufweist, die ausgebildet sind, die Temperatur (290) in dem ersten Prozessteilbereich ganz oder abschnittsweise auf Werte unterhalb von 1300° C einzustellen und/oder die Temperatur (350) in dem zweiten Prozessteilbereich ganz oder abschnittsweise auf Werte oberhalb von 1300° C einzustellen.

12. Vorrichtung zur Herstellung von Glashohlkugeln (400) nach Anspruch 10 oder 11,
**dadurch gekennzeichnet, dass**
die Vorrichtung Mittel zur Regelung des Drucks aufweist, die ausgebildet sind, den Druck (300) in dem ersten Prozessteilbereich ganz oder abschnittsweise auf Werte von 101 325 Pa bis 101 345 Pa und/oder den Druck (360) in dem zweiten Prozessteilbereich ganz oder abschnittsweise auf Werte von 101 325 Pa bis 101 305 Pa einzustellen.

13. Vorrichtung zur Herstellung von Glashohlkugeln (400) nach einem der Ansprüche 10 bis 12,
**dadurch gekennzeichnet, dass**
die Vorrichtung Mittel zur Regelung der Atmosphärenzusammensetzung aufweist, die ausgebildet sind, in dem ersten Prozessteilbereich ganz oder abschnittsweise eine reduzierende Atmosphäre (310) zu erzeugen und in dem zweiten Prozessteilbereich ganz oder abschnittsweise eine oxidierende Atmosphäre (370) zu erzeugen.

14. Vorrichtung zur Herstellung von Glashohlkugeln (400) nach einem der Ansprüche 10 bis 13,
**dadurch gekennzeichnet, dass**
die Vorrichtung wenigstens zwei unabhängige Speicher- und Dosiereinrichtungen (500) für Rohmaterial aufweist.

15. Vorrichtung zur Herstellung von Glashohlkugeln (400) nach einem der Ansprüche 10 bis 14,
**dadurch gekennzeichnet, dass**
die Vorrichtung mit weiteren nachgelagerten Mitteln zur Herstellung wenigstens einer anderen Art von Glasprodukt wirkverbunden ist.

## Claims

1. A method for producing hollow glass spheres (400), wherein a glass melt (30) is firstly generated from at least one raw material and a refining agent which escapes in gas form at a temperature above a refining temperature of the glass melt, the said glass melt is subjected to a refining process and then a strand-like glass melt stream (180) is generated and small elements (220) are separated from this and accelerated in the direction of a process region which is regulated in terms of temperature and/or pressure and/or atmosphere composition, wherein a first process sub-region of the process region is regulated, at least in sections, to a temperature (290) which is below a refining temperature (100) of the glass melt (30) and/or regulated to a pressure (300) which is above a limit pressure and/or in which a reducing atmosphere (310) is generated, at least in sections, so that a reboil reaction is prevented in the first process sub-region, and a second process sub-region is regulated, at least in sections, to a temperature (350) which is above the refining temperature (100) of the gas melt (30) and/or regulated to a pressure (360) which is below a limit pressure and/or in which an oxidizing atmosphere (370) is generated, at least in sections, so that a reboil reaction is induced in the second process sub-region, and the elements (220) pass through the second process sub-region in a free-flight phase after they have passed through the first process sub-region.

2. The method for producing hollow glass spheres (400) according to Claim 1,
**characterized in that**
a difference between the temperature (290) in the first and the temperature (350) in the second process sub-region is between 30 K and 100 K.

3. The method for producing hollow glass spheres (400) according to Claim 1 or 2,
**characterized in that**
the temperature (290) in the first process sub-region is below 1300°C and the temperature (350) in the second process sub-region is above 1300°C.

4. The method for producing hollow glass spheres (400) according to any one of Claims 1 to 3,
**characterized in that**
the limit pressure is at 101 325 Pa and a difference between the pressure (300) in the first and the pressure (360) in the second process sub-region is between 1 Pa and 20 Pa.

5. The method for producing hollow glass spheres (400) according to any one of Claims 1 to 4,
**characterized in that**
the reducing or oxidizing atmosphere (310, 370) is generated by regulating an oxygen excess.

6. The method for producing hollow glass spheres (400) according to any one of Claims 1 to 5,
**characterized in that**,
during the free-flight phase in the second process sub-region, the elements (220) are supplied with energy by means of at least one burner (340).

7. The method for producing hollow glass spheres (400) according to any one of Claims 1 to 6,
**characterized in that**,
at the end of the process region, a gas stream is generated which intercepts the hollow glass spheres (400).

8. The method for producing hollow glass spheres (400) according to any one of Claims 1 to 7,
**characterized in that**,
after its generation, the glass melt is divided into at least two sub-streams and hollow glass spheres (400) are produced according to the inventive method by a first sub-stream, and at least one other type of glass product is produced by at least one further sub-stream.

9. The method for producing hollow glass spheres (400) according to any one of claims 1 to 8,
**characterized in that**
the hollow glass spheres (400) are provided with a hydrophobic coating.

10. A device for producing hollow glass spheres (400), having a melt furnace (10) with a first region (20), which is designed to generate a glass melt (30) from a raw material and a refining agent, and with a second region (80), which is designed to regulate the glass melt (30) to a refining temperature (100), furthermore having means arranged downstream for generating a strand-like temperature-regulated melt stream (180) and means for separating the melt stream (180) into small elements (220) and for sporadically accelerating the small elements (220), wherein the device has a process region which is arranged downstream and has a temperature which can be regulated and/or a pressure which can be regulated and/or an atmosphere composition which can be regulated, whereof a first process sub-region can be regulated, at least in sections, to a temperature (290) below the refining temperature (100) and/or a pressure (300) above a limit pressure and/or in which a reducing atmosphere (310) can be generated and whereof a second process sub-region can be regulated to a temperature (350) above the refining temperature (100) and/or to a pressure (360) below a limit pressure and/or in which an oxidizing atmosphere (370) can be generated.

11. The device for producing hollow glass spheres (400) according to Claim 10,
**characterized in that**
the device has means for regulating the temperature, which are designed to set the temperature (290) in the first process sub-region, entirely or in sections, to values below 1300°C and/or the temperature (350) in the second process sub-region, entirely or in sections, to values above 1300°C.

12. The device for producing hollow glass spheres (400) according to Claim 10 or 11,
**characterized in that**
the device has means for regulating the pressure, which are designed to set the pressure (300) in the first process sub-region, entirely or in sections, to values of 101 325 Pa to 101 345 Pa and/or the pressure (360) in the second process sub-region, entirely or in sections, to values of 101 325 Pa to 101 305 Pa.

13. The device for producing hollow glass spheres (400) according to any one of Claims 10 to 12,
**characterized in that**
the device has means for regulating the atmosphere composition, which are designed to generate a reducing atmosphere (310) in the first process sub-region, entirely or in sections, and to generate an oxidizing atmosphere (370) in the second process sub-region, entirely or in sections.

14. The device for producing hollow glass spheres (400) according to any one of Claims 10 to 13,
**characterized in that**
the device has at least two independent storage and dosing devices (500) for raw material.

15. The device for producing hollow glass spheres (400) according to any one of Claims 10 to 14,
**characterized in that**
the device is actively connected to further means, arranged downstream, for producing at least one other type of glass product.

## Revendications

1. Procédé pour la fabrication de billes de verre creuses (400), du verre fondu (30) étant d'abord produit à partir d'au moins une matière première et d'un agent d'affinage, lequel se dégage du verre fondu sous forme de gaz à une température supérieure à la température d'affinage, ce verre fondu étant soumis à un processus d'affinage, un flux de verre fondu (180) en forme de cordon étant ensuite produit, et de petits éléments (220) étant séparés de celui-ci et accélérés en direction d'un domaine de processus à régulation de température et/ou de pression et/ou de composition d'atmosphère, un premier domaine partiel de processus du domaine de processus étant régulé au moins par section à une température (290) qui est inférieure à une température d'affinage (100) du verre fondu (30) et/ou étant régulé à une pression (300) qui est supérieure à une pression limite et/ou dans lequel une atmosphère réductrice (310) est produite au moins par section de telle sorte qu'une réaction de rebullage est empêchée dans le premier domaine partiel de processus et un deuxième domaine partiel de processus étant régulé au moins par section à une température (350) qui est supérieure à la température d'affinage (100) du verre fondu (30) et/ou est régulé à une pression (360) qui est inférieure à une pression limite et/ou une atmosphère oxydante (370) est produite au moins par section de telle sorte qu'une réaction de rebullage est provoquée dans le deuxième domaine partiel de processus et que les éléments (220) traversent le deuxième domaine partiel de processus au cours d'une phase de trajectoire libre, après avoir traversé le premier domaine partiel de processus.

2. Procédé pour la fabrication de billes de verre creuses (400) selon la revendication 1,
**caractérisé en ce que**
une différence entre la température (290) dans le premier domaine partiel de processus et la température (350) dans le deuxième domaine partiel de processus se trouve entre 30 K et 100 K.

3. Procédé pour la fabrication de billes de verre creuses (400) selon la revendication 1 ou 2,
**caractérisé en ce que**
la température (290) dans le premier domaine partiel de processus est inférieure à 1 300 °C et la température (350) dans le deuxième domaine partiel de processus est supérieure à 1 300 °C.

4. Procédé pour la fabrication de billes de verre creuses (400) selon l'une quelconque des revendications 1 à 3, **caractérisé en ce que**
la pression limite est de 101 325 Pa et une différence entre la pression (300) dans le premier domaine partiel de processus et la pression (360) dans le deuxième domaine partiel de processus se trouve entre 1 Pa et 20 Pa.

5. Procédé pour la fabrication de billes de verre creuses (400) selon l'une quelconque des revendications 1 à 4, **caractérisé en ce que**
l'atmosphère réductrice ou oxydante (310, 370) est produite par régulation d'un excédent d'oxygène.

6. Procédé pour la fabrication de billes de verre creuses (400) selon l'une quelconque des revendications 1 à 5, **caractérisé en ce que**
pendant la phase de trajectoire libre dans le deuxième domaine partiel de processus, les éléments (220) sont alimentés par de l'énergie avec au moins un brûleur (340).

7. Procédé pour la fabrication de billes de verre creuses (400) selon l'une quelconque des revendications 1 à 6, **caractérisé en ce que**,
à la fin du domaine de processus, un flux de gaz est produit avec lequel les billes de verre creuses (400) sont interceptées.

8. Procédé pour la fabrication de billes de verre creuses (400) selon l'une quelconque des revendications 1 à 7, **caractérisé en ce que**
le verre fondu est divisé en au moins deux flux partiels après sa production et des billes de verre creuses (400) sont fabriquées par le procédé conforme à l'invention avec un premier flux partiel et au moins un autre type de produit en verre est fabriqué avec au moins un autre flux partiel.

9. Procédé pour la fabrication de billes de verre creuses (400) selon l'une quelconque des revendications 1 à 8,
**caractérisé en ce que**
les billes de verre creuses (400) sont munies d'un revêtement hydrophobe.

10. Dispositif pour la fabrication de billes de verre creuses (400), présentant un four de fusion (10) avec un premier domaine (20), lequel est formé pour produire du verre fondu (30) à partir d'une matière première et d'un agent d'affinage, et avec un deuxième domaine (80), lequel est formé pour réguler le verre fondu (30) à une température d'affinage (100), présentant en outre des moyens en amont pour la production d'un flux de masse fondue (180) régulé en température en forme de cordon ainsi que des moyens pour la séparation du flux de masse fondue (180) en petits éléments (220) et pour une accélération ponctuelle des petits éléments (220), le dispositif présentant un domaine de processus en aval avec température réglable et/ou pression réglable et/ou composition d'atmosphère réglable, duquel un premier domaine partiel de processus est réglable au moins par section à une température (290) inférieure à la température d'affinage (100) et/ou à une pression (300) supérieure à une pression limite et/ou dans lequel une atmosphère réductrice (310) peut être produite et duquel un deuxième domaine partiel de processus est réglable à une température (350) supérieure à la température d'affinage (100) et/ou à une pression (360) inférieure à une pression limite et/ou dans lequel une atmosphère oxydante (370) peut être produite.

11. Dispositif pour la fabrication de billes de verre creuses (400) selon la revendication 10,
**caractérisé en ce que**
le dispositif présente des moyens pour la régulation de la température, lesquels sont formés pour régler la température (290) dans le premier domaine partiel de processus totalement ou par section à des valeurs inférieures à 1 300 °C et/ou pour régler la température (350) dans le deuxième domaine partiel de processus totalement ou par section à des valeurs supérieures à 1 300°C.

12. Dispositif pour la fabrication de billes de verre creuses (400) selon la revendication 10 ou 11,
**caractérisé en ce que**
le dispositif présente des moyens pour la régulation de la pression, lesquels sont formés pour régler la pression (300) dans le premier domaine partiel de processus totalement ou par section à des valeurs inférieures de 101 325 Pa à 101 345 Pa et/ou pour régler la pression (360) dans le deuxième domaine partiel de processus totalement ou par section à des valeurs de 101 325 Pa à 101 305 Pa.

13. Procédé pour la fabrication de billes de verre creuses (400) selon l'une quelconque des revendications 10 à 12,
**caractérisé en ce que**
le dispositif présente des moyens pour la régulation de la composition de l'atmosphère, lesquels sont formés pour produire totalement ou par section une atmosphère réductrice (310) dans le premier domaine partiel de processus et pour produire totalement ou par section une atmosphère oxydante (370) dans le deuxième domaine partiel de processus.

14. Dispositif pour la fabrication de billes de verre creuses (400) selon l'une quelconque des revendications 10 à 13, **caractérisé en ce que**
le dispositif présente au moins deux installations de stockage et de dosage (500) indépendantes pour des matières premières.

15. Dispositif pour la fabrication de billes de verre creuses (400) selon l'une quelconque des revendications 10 à 14, **caractérisé en ce que**
le dispositif est en relation active avec d'autres moyens en aval pour la fabrication d'au moins un autre type de produit en verre.
